# EUROPÄISCHE PATENTSCHRIFT

(11) **EP 3 435 501 B1**
(45) Veröffentlichungstag und Bekanntmachung des Hinweises auf die Patenterteilung: **28.12.2022**
(21) Anmeldenummer: 18185188.2
(22) Anmeldetag: 24.07.2018
(51) Int. Cl.: H02G 3/04, H02G 3/32

(54) **KABELKANAL**
CABLE CHANNEL
CANAL À CÂBLES

(30) Priorität: 24.07.2017 DE 102017116679
(43) Veröffentlichungstag der Anmeldung: 30.01.2019
(73) Patentinhaber: ALSTOM Transport Technologies, 93400 Saint-Ouen (FR)
(72) Erfinder: PAUSTIAN, Harald, 31141 Hildesheim (DE); SIANO-KEUNE, Susanne, 38312 Flöthe (DE)
(74) Vertreter: Lavoix

(56) Entgegenhaltungen:
- EP-A1- 2 709 221
- EP-A1- 2 858 189
- WO-A1-99/10957
- WO-A2-2009/112754
- DE-A1- 19 726 500
- DE-A1-102013 107 181
- FR-A1- 2 972 235

## Beschreibung

Die Erfindung bezieht sich auf einen Kabelkanal gemäß dem Oberbegriff des Anspruchs 1, des Weiteren auf eine Kabelkanalanordnung welche einen solchen Kabelkanal aufweist, sowie auf ein Schienenfahrzeug, welches einen solchen Kabelkanal aufweist.

Der vorgeschlagene Kabelkanal kann bei der elektrischen Ausrüstung von Anlagen, insbesondere auch bei Schienenfahrzeugen, verwendet werden.

Ein solcher Kabelkanal ist insbesondere dazu geeignet, mehrere Kabel aufzunehmen und an einer Wand entlang, zum Beispiel durch einen Raum, zu führen. Dabei schützt die Benutzung eines solchen Kanals die Kabel vor Außeneinflüssen und erhöht somit ihre mögliche Betriebszeit. Außerdem wird die Sicherheit verbessert, da die Kabel nicht direkt zugänglich sind und die Umgebung durch das Verstecken der Kabel im Kabelkanal verschönert.

Dies ist in Schienenfahrzeugen besonders wichtig, da dort, aufgrund der vielen elektrischen und elektronischen Systeme, auf relativ engem Raum, viele Kabel verschiedener Klassen verlaufen müssen. Dabei ist es wichtig, dass Kabel verschiedener Klassen, zum Beispiel Niederspannungs-, Hochspannungs- und Datenkabel voneinander getrennt und abgeschirmt sind.

Dies kann dadurch erreicht werden, dass im Kanal Trennstege vorgesehen werden, welche sich in Längsrichtung des Kanals erstrecken und innerhalb des Kabelkanals verschiedene Abteile vorbestimmter Breite abtrennen. Dafür weisen die Kabelkanäle Reihen von schmalen Langlöchern auf, die sowohl dazu dienen, die Trennstege mit dem Boden des Kanals zu verbinden, als auch die im Kabelkanal aufgenommenen Kabel über Kabelbinder, welche durch zwei benachbarte Langlöcher durchgefädelt werden, an dem Kabelkanal festzubinden.

Solche Kabelkanäle haben den Nachteil, dass sie wenig Flexibilität in Hinsicht auf die Bestückung mit Kabeln aufweisen.

EP 2 709 221 A1 beschreibt eine aus Metall gefertigte Kabelbahn die der Aufnahme von Leitungen dient.

FR 2 972 235 A1 beschreibt eine Vorrichtung zur Befestigung eines Teils an einem Kabelkanal, sowie einen Kabelkanal mit einer solchen Vorrichtung.

WO 2009/112754 A2 beschreibt eine Vorrichtung zur Befestigung mehrerer zusammengefasster Kabel.

DE 10 2013 107 181 A1 beschreibt eine Befestigungsvorrichtung für Kabel.

EP 2 858 189 A1 beschreibt eine Trennvorrichtung für Kabelbahnen.

Der Erfindung liegt die Aufgabe zugrunde, einen Kabelkanal anzugeben, der eine größere Flexibilität in Hinsicht auf die Bestückung mit Kabeln aufweist und somit eine größere Standardisierung erlaubt.

Erfindungsgemäß wird diese Aufgabe gelöst durch die Merkmale des Oberbegriffs des Anspruchs 1 in Verbindung mit den Merkmalen des kennzeichnenden Teils.

Durch das Vorsehen des erfindungsgemäßen Lochmusters im Kabelkanal mit zusätzlichen Verbindungslöchern für die Trennstege, die breiter sind als die schmalen Verbindungslanglöcher, die üblicherweise zur Verbindung der Trennstege mit dem Kanal benutzt werden, erlaubt der erfindungsgemäße Kabelkanal eine größere Variabilität der Positionierung der Trennstege in Querrichtung des Kabelkanals als bekannte Kabelkanäle.

Dadurch ist es möglich, für jede Anwendung die Breite der Kabelabteile des Kabelkanals an die Anzahl der darin aufzunehmenden Kabel weitgehend anzupassen. Somit werden sehr unterschiedliche Belegungen des Kabelkanals mit Kabeln ermöglicht, was die Standardisierung der Kabelkanäle unterstützt.

Vorteilhafte Ausgestaltungen der Erfindung sind in den Unteransprüchen gekennzeichnet.

Eine andere Ausführungsform betrifft einen Kabelkanal, welcher sich entlang einer Längsrichtung erstreckt, umfassend zwei Seitenwände und einen Boden, welcher die Seitenwände miteinander verbindet, wobei der Kabelkanal außerdem Befestigungslöcher zum Befestigen der im Kabelkanal aufgenommenen Kabel am Boden des Kabelkanals aufweist, wobei sich die Befestigungslöcher durch den Boden hindurch erstrecken und jedes Befestigungsloch einen Rand und zwei Laschen aufweist, welche vom Rand aus in das Befestigungsloch hineinragen und jede Lasche einen Befestigungssteg und ein mit dem Befestigungssteg verbundenes Halteteil umfasst, wobei der Befestigungssteg an einem Ende mit dem Rand verbunden ist und das Halteteil ein freies Ende der Lasche bildet und wobei die Breite des Halteteils größer ist als die Breite des Befestigungsstegs.

Weitere Vorteile des erfindungsgemäßen Kabelkanals ergeben sich aus der nachstehenden Beschreibung.

Die Erfindung wird nachstehend anhand der in den Zeichnungen dargestellten Ausführungsbeispiele näher erläutert, wobei:
Figur 1 einen erfindungsgemäßen Kabelkanal in perspektivischer Ansicht zeigt;
Figur 2 einen Teil des Kabelkanals der Figur 1 in einer Ansicht von unten zeigt,
Figur 3 ein Detail der Figur 2 zeigt, und
Figur 4 eine Draufsicht auf ein Kabel zeigt, welches über ein zweites Befestigungsloch befestigt ist.

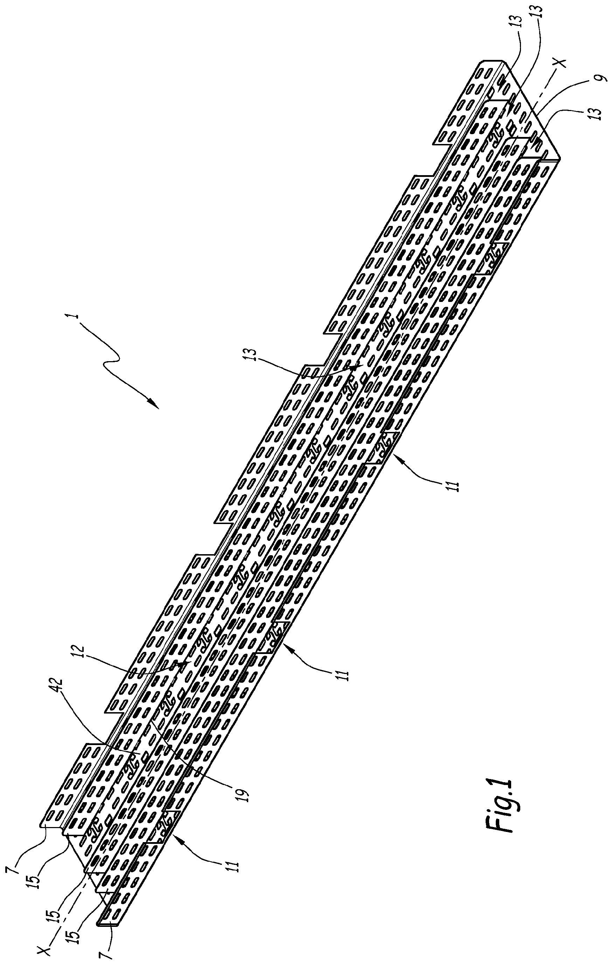

Die Figur 1 zeigt einen erfindungsgemäßen Kabelkanal 1 in perspektivischer Ansicht.

Der Kabelkanal 1 erstreckt sich entlang einer Längsachse X-X.

Wie in Figur 1 gezeigt, weist der Kabelkanal 1 zwei Seitenwände 7 und einen Boden 9 auf, welcher die Seitenwände 7 miteinander verbindet. Die Seitenwände 7 erstrecken sich im Wesentlichen senkrecht zum Boden 9 und parallel zueinander.

Der Boden 9 und die Seitenwände 7 sind bevorzugt aus einem Stück hergestellt, zum Beispiel durch Biegen und gegebenenfalls Ausschneiden eines geeigneten Blechs.

Alternativ können die Seitenwände 7 mit dem Boden 9 durch ein geeignetes Verbindungsmittel verbunden sein, zum Beispiel durch eine jeweilige Schweißnaht.

In der abgebildeten Ausführungsform weisen die Seitenwände 9 Ausnehmungen 11 auf. Diese Ausnehmungen 11 erstrecken sich über die gesamte Höhe der Seitenwände 9. Sie weisen eine rechteckige Kontur auf. Die Ausnehmungen 11 einer jeweiligen Seitenwand 9 sind in Längsrichtung der Seitenwand 9 voneinander beabstandet, insbesondere regelmäßig voneinander beabstandet. Die Ausnehmungen 11 dienen dazu, den im Kabelkanal 1 aufgenommenen Kabeln einen seitlichen Ausgang aus dem Kabelkanal 1 zu ermöglichen, zum Beispiel wenn aufgrund der Bauraumsituation kein Ausgang nach oben aus dem Kabelkanal 1 möglich ist.

Der Boden 9 und die Seitenwände 7 grenzen einen Innenraum 12 zur Aufnahme von Kabeln ab.

Der Kabelkanal 1 umfasst zumindest zwei Abteile 13 zur Aufnahme von Kabeln. Die Abteile 13 sind im Innenraum 12 des Kabelkanals 1 gebildet. Sie erstrecken sich in Längsrichtung X-X des Kabelkanals 1. Jedes Abteil 13 nimmt bevorzugt nur Kabel einer bestimmten Klasse auf, und insbesondere alle Kabel dieser Klasse.

Der Kabelkanal 1 weist eine Mehrzahl von ersten Befestigungslöchern 25 zum Befestigen der Kabel am Kabelkanal 1. Die ersten Befestigungslöcher 25 sind im Boden 9 des Kabelkanals 1 gebildet und erstrecken sich durch den Boden 9 hindurch.

Die ersten Befestigungslöcher 25 sind als Langlöcher geformt. Sie erstrecken sich parallel zur Längsachse X-X des Kabelkanals 1, das heißt mit ihrer Längsachse parallel zur Längsachse X-X des Kabelkanals 1. Insbesondere weisen die ersten Befestigungslöcher 25 zwei Längsseiten 29 auf, die sich in Längsrichtung X-X des Kabelkanals 1 erstrecken, und zwei Querseiten 31, die die Längsseiten 29 an ihren Enden miteinander verbinden. Im abgebildeten Ausführungsbeispiel sind die Querseiten 31 in Draufsicht halbkreisförmig.

Alle ersten Befestigungslöcher 25 haben identische Maße, das heißt insbesondere eine gleiche Länge und Breite.

Die ersten Befestigungslöcher 25 erstrecken sich in mehreren, in Querrichtung voneinander beabstandeten, Längsreihen über die Länge des Kabelkanals 1. Die Längsachsen der ersten Befestigungslöcher 25 einer jeden Reihe fluchten miteinander.

Die Längsreihen von ersten Befestigungslöchern 25 sind insbesondere in Querrichtung gleichmäßig voneinander beabstandet.

Im abgebildeten Ausführungsbeispiel sind die Längsreihen von ersten Befestigungslöchern 25 im Verhältnis zueinander derart angeordnet, dass die ersten Befestigungslöcher 25 in Querrichtung Querreihen bilden.

Die ersten Befestigungslöcher 25 dienen dazu, die in dem Kabelkanal 1 aufgenommenen Kabel am Boden des Kabelkanals 1 festzubinden. Dazu werden Kabelbinder (nicht abgebildet) durch zwei in Querrichtung benachbarte erste Befestigungslöcher 25 gefädelt, sodass sie eine Schlaufe bilden, welche sich um das Kabel und um den zwischen den beiden Befestigungslöchern 25 gebildeten Bodensteg 26 erstreckt.

Der Kabelkanal 1 umfasst ebenfalls zumindest einen Trennsteg 15. Jeder Trennsteg 15 erstreckt sich in Längsrichtung X-X im Innenraum 12 des Kabelkanals 1 zwischen den Seitenwänden 7. Wie in Figur 1 gezeigt, erstreckt sich jeder Trennsteg 15 senkrecht zum Boden 5 des Kabelkanals 1 und parallel zu den Seitenwänden 7.

Jedes Abteil 13 wird seitlich entweder durch zwei benachbarte Trennstege 15 oder durch einen Trennsteg 15 und eine Seitenwand 7 abgegrenzt.

Die Trennstege 15 dienen dazu, verschiedene Kabel oder Kabelgruppen, die im Kabelkanal 1 aufgenommen werden, voneinander zu trennen. Dies ist insbesondere wichtig, wenn in einem Kabelkanal 1 Kabel verschiedener Kabelklassen aufgenommen werden, zum Beispiel sowohl Kabel zur Datenübertragung, wie auch Niederspannungs- und/oder Hochspannungskabel.

Jeder Trennsteg 15 liegt an seinem unteren Rand 19 am Boden 9 an. Jeder Trennsteg 15 wird durch eine Wand gebildet, welche sich im Wesentlichen in einer Ebene erstreckt.

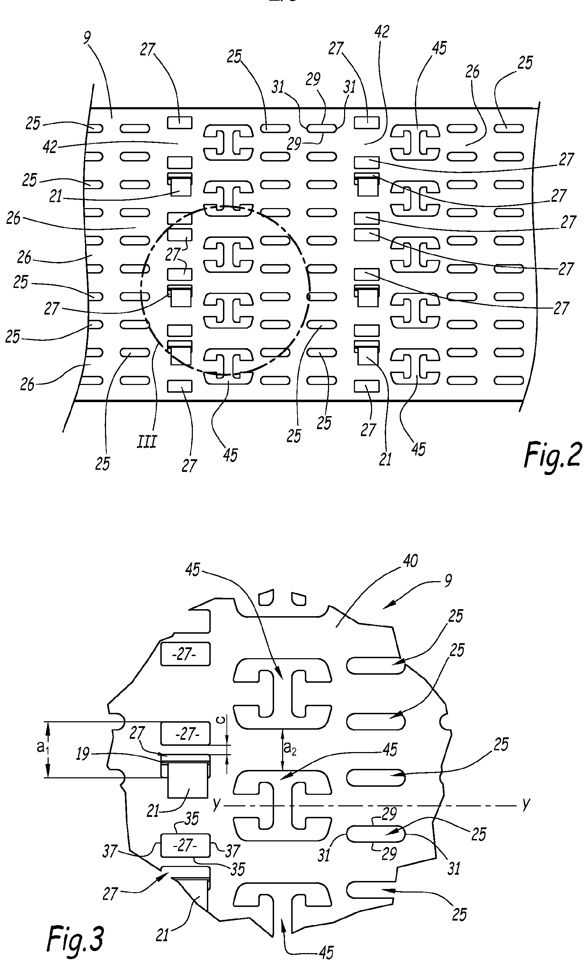

Wie in Figur 3 gezeigt sind die Trennstege 15 erfindungsgemäß über Verbindungslaschen 21 mit dem Boden 9 verbunden. Jede Verbindungslasche 21 ist mit dem unteren Rand 19 des jeweiligen Trennsteges 15 verbunden und erstreckt sich senkrecht zum Trennsteg 15.

Erfindungsgemäß sind an jedem Trennsteg 15 eine Mehrzahl von in Längsrichtung des Trennstegs 15 voneinander beabstandeten Verbindungslaschen 21 angeordnet. Die an einem jeweiligen Trennsteg 15 angeordneten Verbindungslaschen 21 sind insbesondere gleichmäßig voneinander beabstandet.

Der Kabelkanal 1 weist eine Mehrzahl von Verbindungslöchern 27 zum Verbinden der Trennstege 15 mit dem Kabelkanal 1 auf. Die Verbindungslöcher 27 dienen zur Aufnahme der Verbindungslaschen 21. Sie sind im Boden 9 des Kabelkanals 1 gebildet und erstrecken sich durch den Boden 9 hindurch.

Die Verbindungslöcher 27 sind in Längsrichtung X-X des Kabelkanals 1 langgestreckt. Sie weisen eine Länge auf, die größer ist, als Ihre Breite. Jedes Verbindungsloch 27 umfasst zwei Längsseiten 35, die parallel zueinander verlaufen und zwei Querseiten 37, die diese Längsseiten 35 sind an ihren Enden miteinander verbinden.

Im abgebildeten Ausführungsbeispiel weisen die Verbindungslöcher 27 in Draufsicht eine rechteckige Kontur auf.

Alternativ können die Verbindungslöcher 27 ebenfalls als Langlöcher ausgebildet sein, das heißt mit halbrunden Querseiten 37.

Alle Verbindungslöcher 27 weisen identische Maße auf, das heißt insbesondere eine gleiche Länge und Breite.

Gemäß der Erfindung ist die Breite der Verbindungslöcher 27, quer zur Längsrichtung X-X, größer als die Breite der ersten Befestigungslöcher 25.

Die Breite der Verbindunglöcher 27 ist größer als die Dicke der Trennstege 15 in Längsrichtung.

Die Verbindungslöcher 27 erstrecken sich in mehreren, in Querrichtung voneinander beabstandeten Längsreihen über die Länge des Kabelkanals 1. Die Längsachsen der Verbindungslöcher 27 einer jeden Reihe fluchten miteinander.

Im abgebildeten Ausführungsbeispiel sind die Längsreihen von Verbindungslöchern 27 im Verhältnis zueinander derart angeordnet, dass die Verbindungslöcher 27 in Querrichtung Querreihen bilden.

Die Verbindungslöcher 27 einer jeweiligen Reihe sind dazu geeignet, die Verbindungslaschen 21 eines Trennsteges 15 aufzunehmen. Die Verbindungslöcher 27 in einer Reihe sind derart angeordnet, dass jede Verbindungslasche 21 der Trennstege 15 in ein jeweiliges Verbindungsloch 27 eingeführt werden kann. Insbesondere entspricht der Abstand zwischen zwei benachbarten Verbindungslöchern 27 dem Abstand zwischen zwei benachbarten Verbindungslaschen 21 an einem Trennsteg 15.

In der abgebildeten Ausführungsform verläuft jede Längsreihe von Verbindungslöchern 27 zwischen zwei benachbarten Reihen von ersten Befestigungslöchern 25. Insbesondere sind die Längsreihen von Verbindungslöchern 27 in diesem Beispiel derart angeordnet, dass sich zwischen zwei benachbarten Längsreihen von ersten Befestigungslöchern 25 im Wechsel entweder zwei Längsreihen von Verbindungslöchern 27 oder keine Längsreihe von Verbindungslöchern 27 erstreckt.

Im abgebildeten Ausführungsbeispiel verläuft jede Querreihe von Verbindungslöchern 27 zwischen benachbarten Querreihen von ersten Befestigungslöchern 25.

Wie in Figur 3 gezeigt sind die Verbindungslöcher 27 derart geformt, dass die Verbindungslaschen 21 der Trennstege 15 durch die Verbindungslöcher 27 hindurch geführt werden können, wenn die Trennstege 15 im Innenraum 12 des Kabelkanals 1 über einer Längsreihe von Verbindungslöchern 27 angeordnet sind. Dabei liegen die Verbindungslaschen 21 an einer Außenseite 40 des Bodens 9 an, während der untere Rand 19 des Trennstegs 15 an einer Innenseite 42 des Bodens 9 anliegt.

Die Verbindungslaschen 21 sind über geeignete Verbindungsmittel mit dem Boden 9 verbunden. Erfindungsgemäß werden die Verbindunglaschen 21 durch Schweißen, insbesondere Punktschweißen, oder durch Durchsetzfügen, auch Clinchen genannt, mit dem Boden 9 an dessen Außenseite 40 verbunden.

Wie insbesondere in Figuren 2 bis 4 gezeigt umfasst der Kabelkanal 1 des Weiteren, zusätzlich zu den ersten Befestigungslöchern 25, optionale zweite Befestigungslöcher 45, welche ebenfalls dazu dienen, die Kabel an dem Kabelkanal 1 festzubinden.

Die zweiten Befestigungslöcher 45 sind im Boden 9 des Kabelkanals 1 gebildet und erstrecken sich durch den Boden 9 hindurch.

Die zweiten Befestigungslöcher 45 sind in Reihen angeordnet, welche sich in Querrichtung des Kabelkanals 1 erstrecken.

Im abgebildeten Ausführungsbeispiel erstreckt sich jede Reihe von zweiten Befestigungslöchern 45 zwischen einer Querreihe von Verbindungslöchern 27 und einer Querreihe von ersten Befestigungslöchern 25.

In dem in den Zeichnungen abgebildeten Ausführungsbeispiel weist jedes zweites Befestigungsloch 45 einen Rand 50 und zwei Laschen 52 auf, welche vom Rand 50 aus in das Loch 45 hineinragen. Jede Lasche 52 erstreckt sich in der Ebene des Bodens 9 entlang einer Längsachse Y-Y, welche sich parallel zur Längsrichtung X-X des Kabelkanals 1 erstreckt.

Jede Lasche 52 umfasst einen Befestigungssteg 54, welcher an einem Ende mit dem Rand verbunden ist und sich entlang der Längsachse Y-Y erstreckt und ein Halteteil 56, welches mit dem Befestigungssteg 54 verbunden ist und sich quer zur Längsrichtung erstreckt. Das Halteteil 56 bildet ein freies Ende der Lasche 52.

Die Breite b₁ des Halteteils 56 ist grösser als die Breite b₂ des Befestigungsstegs 54, wobei b₁ und b₂ quer zur Längsrichtung der Lasche 52 gemessen werden.

Die beiden Laschen 52 eines jeweiligen Befestigungslochs 45 sind symmetrisch relativ zu einer Symmetrieebene, welche sich senkrecht zum Boden 9 und quer zur Längsrichtung X-X erstreckt.

Die zweiten Befestigungslöcher 45 sind derart am Boden 9 angeordnet, dass sich die Laschen 52 in Längsrichtung in der Verlängerung der Bodenstege 26 zwischen zwei in Querrichtung benachbarten ersten Befestigungslöchern 25 erstrecken. Dadurch ist es möglich, ein jeweiliges Kabel sowohl über erste Befestigungslöcher 25, als auch über zweite Befestigungslöcher 45 festzubinden, je nachdem, in welchem Abstand das Kabel am Boden 9 festgebunden werden soll und ob die Außenseite des Kanals 1 zugänglich ist.

Wie in Figur 3 gezeigt sind die Verbindungslöcher 27 insbesondere genau so breit, dass der Abstand a₁, quer zur Längsrichtung X-X, zwischen zwei entgegengesetzten Längsseiten 35 zweier benachbarter Verbindungslöcher 27 größer ist, insbesondere etwas größer ist, als der Abstand a₂ zwischen zwei benachbarten Befestigungslöchern 45. Des Weiteren ist die Breite der Verbindungslöcher 27 insbesondere derart bemessen, dass der Abstand c zwischen den benachbarten Verbindungslöchern 27 groß genug ist, um die erforderliche Stabilität des Kabelkanals 1 zu gewährleisten.

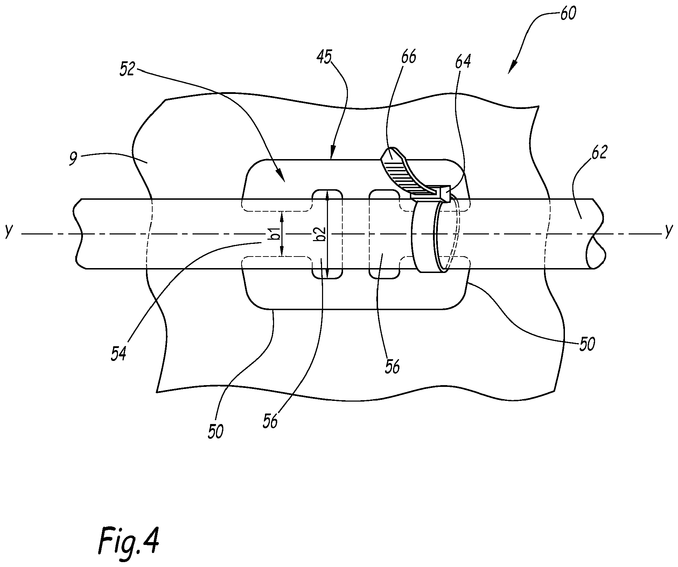

Die Figur 4 zeigt eine Anordnung 60, welche den Kabelkanal 1, ein Kabel 62 und einen Kabelbinder 64 aufweist.

Der Kabelbinder 64 umfasst einen Kopf 64, sowie ein Band 66, welches an einem ersten Ende mit dem Kopf 64 verbunden ist. Das Band 66 ist dazu vorgesehen, dass es durch eine im Kopf 64 vorgesehenen Öffnung gezogen wird und somit eine Schlaufe bildet. Das Kabel 62 erstreckt sich im Wesentlichen in Längsrichtung X-X des Kabelkanals 1 und ist über den Kabelbinder 64 mit dem Boden des Kabelkanals 1 verbunden.

An der abgebildeten Stelle wird das Kabel 62 über ein zweites Befestigungsloch 45 mit dem Kabelkanal 1 verbunden. Insbesondere ist der Kabelbinder 64 mit einer Lasche 52 eines zweiten Befestigungslochs 45 verbunden. Dabei bildet der Kabelbinder 64 eine Schlaufe, welche das Kabel 62 und den Befestigungssteg 54 der Lasche 52 eng umfasst.

Das Halteteil 56 bildet einen Anschlag für den Kabelbinder 64 in Längsrichtung, indem es eine Verschiebung des Kabelbinders 64 in Längsrichtung begrenzt. Das Halteteil 56 verhindert insbesondere ein Abrutschen vom Kabelbinder 64 vom Befestigungssteg 54.

Alternativ oder zusätzlich wird das Kabel 62 durch den Kabelbinder 64 über erste Befestigungslöcher 25 mit dem Boden 9 des Kabelkanals 1 verbunden. In diesem Fall, wird der Kabelbinder durch zwei in Querrichtung benachbarte erste Befestigungslöcher 25 geführt und bildet somit eine Schlaufe um das Kabel 62 und den Bodensteg 26 zwischen den Löchern 25.

Die Anordnung 60 kann zum Beispiel vorteilhaft in einem Schienenfahrzeug benutzt werden.

Der erfindungsgemäße Kabelkanal 1 ist besonders vorteilhaft, da er durch das Vorsehen der zusätzlichen, breiteren Verbindungslöcher 27 eine größere Variabilität der Positionierung der Trennstege 21 in Querrichtung des Kabelkanals 1 erlaubt als Kabelkanäle welche lediglich erste Befestigungslöcher 25 aufweisen, die sowohl zur Befestigung der Trennstege, als auch zur Befestigung der Kabel dienen. Bei der Montage des Kabelkanals 1 können die Positionen der Trennstege 15 je nach gewünschter Breite der Kabelabteile 13 in Querrichtung über die Breite eines jeweiligen, breiten Verbindungslochs 27 variiert werden, sodass eine Vielzahl von möglichen Abteilbreiten entsteht. Dabei müssen die Abteile 13 nicht zwangsläufig eine Breite, welche einem ganzzahligen Vielfachen des Abstandes zwischen zwei benachbarten ersten Befestigungslöchern 25 entspricht, wie das bei bekannten Kabelkanälen der Fall ist.

Dadurch ist es möglich, für jede Anwendung, die Breite der Kabelabteile 13 des Kabelkanals 1 an die Anzahl der darin aufzunehmenden Kabel weitgehend anzupassen. Somit werden sehr unterschiedliche Belegungen des Kabelkanals 1 mit Kabeln ermöglicht, was die Standardisierung der Kabelkanäle unterstützt.

Außerdem bleiben dadurch mehr erste Befestigungslöcher 25 frei für die Aufnahme von Kabelbindern. Des Weiteren besteht gemäß der Erfindung kein Risiko, dass die Verbindungslaschen 21 der Trennstege die ersten oder zweiten Befestigungslöcher 25, 45 überdecken, da sich die Verbindungslöcher 27 in Querreihen zwischen den Querreihen von ersten und zweiten Befestigungslöchern 25, 45 erstrecken.

Die zusätzlichen, zweiten Befestigungslöcher 45 sind ebenfalls vorteilhaft, da sie es erlauben, die Kabel am Kabelkanal 1 festzubinden, wenn nur eine Seite des Kabelkanals 1 zugänglich ist, während es zur Befestigung der Kabel mittels der ersten Befestigungslöcher notwendig ist, dass der Kabelkanal 1 ebenfalls von außen zugänglich ist, um die Kabelbinder durch die Befestigungslöcher fädeln zu können.

Die zweiten Befestigungslöcher 45 könnten gegebenenfalls in einem Kabelkanal 1 unabhängig von den Verbindungslöchern 27 ausgeführt werden.

## Patentansprüche

1. Kabelkanal (1), welcher sich entlang einer Längsrichtung (X-X) erstreckt, umfassend:
- zwei Seitenwände (7) und einen Boden (9), welcher die Seitenwände (7) miteinander verbindet,
- eine Mehrzahl von ersten Befestigungslöchern (25) zum Befestigen der im Kabelkanal (1) aufgenommenen Kabel am Boden des Kabelkanals (1), wobei sich die ersten Befestigungslöcher (25) durch den Boden (9) hindurch erstrecken,
wobei der Kabelkanal (1) außerdem Verbindungslöcher (27) zum Verbinden von Trennstegen (15) mit dem Kabelkanal (1) aufweist, welche zur Aufnahme von Verbindungslaschen (21) eines Trennsteges (15) geeignet sind, wobei sich die Verbindungslöcher (27) durch den Boden (9) hindurch erstrecken und in Querrichtung des Kabelkanals (1) eine größere Breite aufweisen als die ersten Befestigungslöcher (25),
wobei der Kabelkanal (1) ferner zumindest einen Trennsteg (15) umfasst, welcher sich senkrecht zum Boden (9) entlang der Längsrichtung (X-X) zwischen den Seitenwänden (7) erstreckt, wobei jeder Trennsteg an einem Rand (19) mehrere voneinander in Längsrichtung (X-X) beabstandete Verbindungslaschen (21) aufweist, welche sich durch die Verbindungslöcher (27) hindurch erstrecken und an einer Außenseite (40) des Bodens (9) anliegen,
wobei die Breite der Verbindungslöcher (27) grösser ist als die Breite der Trennstege (15),
wobei die Verbindunglaschen (21) durch Schweißen oder durch Durchsetzfügen mit dem Boden (9) an dessen Außenseite (40) verbunden werden.

2. Kabelkanal (1) nach Anspruch 1, **dadurch gekennzeichnet, dass** sich die ersten Befestigungslöcher (25) und die Verbindungslöcher (27) in mehreren, in Querrichtung voneinander beabstandeten Längsreihen über die Länge des Kabelkanals (1) erstrecken, wobei sich jede Längsreihe von Verbindungslöchern (27) zwischen zwei benachbarten Reihen von ersten Befestigungslöchern (25) erstreckt.

3. Kabelkanal (1) nach Anspruch 1 oder 2, **dadurch gekennzeichnet, dass** die ersten Befestigungslöcher (25) und die Verbindungslöcher (27) in Längsrichtung des Kabelkanals (1) langgestreckte Löcher bilden.

4. Kabelkanal (1) nach einem der vorangegangenen Ansprüche, wobei der Kabelkanal (1) außerdem zweite Befestigungslöcher (45) aufweist, wobei jedes zweite Befestigungsloch (45) einen Rand (50) und zwei Laschen (52) aufweist, welche vom Rand (50) aus in das zweite Befestigungsloch (45) hineinragen und jede Lasche (52) einen Befestigungssteg (54) und ein mit dem Befestigungssteg (54) verbundenes Halteteil (56) umfasst, wobei der Befestigungssteg (54) an einem Ende mit dem Rand (50) verbunden ist und das Halteteil (56) ein freies Ende der Lasche (52) bildet und wobei die Breite (b₂) des Halteteils (56) größer ist als die Breite (b₁) des Befestigungsstegs (54).

5. Kabelkanal (1) nach Anspruch 4, wobei die beiden Laschen (52) eines jeweiligen zweiten Befestigungslochs (45) symmetrisch relativ zu einer Symmetrieebene sind, welche sich senkrecht zum Boden (9) und quer zur Längsrichtung (X-X) des Kabelkanals (1) erstreckt.

6. Kabelkanal (1) nach Ansprüchen 4 und 5, wobei die zweiten Befestigungslöcher (45) in Reihen angeordnet sind, welche sich in Querrichtung des Kabelkanals (1) erstrecken und jede Reihe von zweiten Befestigungslöchern (45) sich zwischen einer Querreihe von Verbindungslöchern (27) und einer Querreihe von ersten Befestigungslöchern (25) erstreckt.

7. Anordnung (60) umfassend einen Kabelkanal (1) nach einem der vorangegangenen Ansprüche, sowie ein Kabel (62), welches sich entlang der Längsrichtung (X-X) des Kabelkanals (1) erstreckt und zumindest einen Kabelbinder (64), mit welchem das Kabel (62) am Boden des Kabelkanals (1) festgebunden ist.

8. Schienenfahrzeug umfassend zumindest einen Kabelkanal (1) nach einem der Ansprüche 1 bis 6.

## Claims

1. A cable duct (1) extending in a longitudinal direction (X-X) comprising:
- two side walls (7) and a bottom (9) that connects the side walls (7) to each other,
- a plurality of initial fastening holes (25) for fastening the cables held in the cable duct (1) at the bottom of the cable duct (1), whereby the initial fastening holes (25) extend through the bottom (9),
wherein the cable duct (1) further comprises connecting holes (27) for connecting separators (15) to the cable duct (1), which are suitable for receiving connecting tabs (21) of a separator (15), wherein the connecting holes (27) extend through the bottom (9) and have a greater width in the transverse direction of the cable duct (1) than the initial fastening holes (25),
wherein the cable duct (1) further comprises at least one separator (15) extending perpendicularly to the bottom (9) along the longitudinal direction (X-X) between the side walls (7), each separator having at one edge (19) a plurality of connecting tabs (21) spaced from each other in the longitudinal direction (X-X) and extending through the connecting holes (27) and abutting an outer side (40) of the bottom (9),
wherein the width of the connecting holes (27) is greater than the width of the separators (15),
wherein the connecting tabs (21) are connected to the bottom (9) on its outer side (40) by welding or by clinching.

2. A cable duct (1) according to Claim 1, **characterized in that** the initial fastening holes (25) and the connecting holes (27) extend in a plurality of transversely spaced longitudinal rows along the length of the cable duct (1), each longitudinal row of connecting holes (27) extending between two adjacent rows of initial fastening holes (25).

3. A cable duct (1) according to Claim 1 or 2, **characterized in that** the initial fastening holes (25) and the connecting holes (27) form elongated holes in the longitudinal direction of the cable duct (1).

4. A cable duct (1) according to any one of the preceding claims, wherein the cable duct (1) further comprises second fastening holes (45), each second fastening hole (45) comprising an edge (50) and two tabs (52) projecting from the edge (50) into the second fastening hole (45), each tab (52) comprising a separator bar (54) and a retaining member (56) connected to the separator bar (54), wherein the separator bar (54) is connected at one end to the edge (50) and the retaining member (56) forms a free end of the tab (52) and wherein the width (b₂) of the retaining member (56) is greater than the width (b₁) of the separator bar (54).

5. The cable duct (1) according to Claim 4, wherein the two tabs (52) of a respective second fastening hole (45) are symmetrical relative to a symmetry plane that extends vertically to the bottom (9) and transversely to the longitudinal direction (X-X) of the cable duct (1).

6. A cable duct (1) according to claims 4 and 5, wherein the second fastening holes (45) are arranged in rows extending in the transverse direction of the cable duct (1), each row of second fastening holes (45) extending between a transverse row of connecting holes (27) and a transverse row of initial fastening holes (25).

7. An arrangement (60) comprising a cable duct (1) according to any one of the preceding claims, a cable (62) extending in the longitudinal direction (X-X) of the cable duct (1) and at least one cable tie (64) with which the cable (62) is tied to the bottom of the cable duct (1).

8. A rail vehicle comprising at least one cable duct (1) according to any one of claims 1 through 6.

## Revendications

1. Goulotte de câblage (1), laquelle s'étend le long d'une direction longitudinale (X-X), comprenant :
- deux parois latérales (7) et un fond (9), lequel relie les parois latérales (7) entre elles,
- une pluralité de premiers trous de fixation (25) pour fixer les câbles reçus dans la goulotte de câblage (1) au fond de la goulotte de câblage (1), dans laquelle les premiers trous de fixation (25) s'étendent à travers le fond (9),
dans laquelle la goulotte de câblage (1) présente en outre des trous de liaison (27) pour relier des barrettes de séparation (15) à la goulotte de câblage (1), lesquelles sont adaptées pour recevoir des pattes de liaison (21) d'une barrette de séparation (15), dans laquelle les trous de liaison (27) s'étendent à travers le fond (9) et présentent une largeur supérieure à celle des premiers trous de fixation (25) dans la direction transversale de la goulotte de câblage (1),
dans laquelle la goulotte de câblage (1) comprend en outre au moins une barrette de séparation (15), laquelle s'étend perpendiculairement au fond (9) le long de la direction longitudinale (X-X) entre les parois latérales (7), dans laquelle chaque barrette de séparation présente sur un bord (19) plusieurs pattes de liaison (21) espacées les unes des autres dans la direction longitudinale (X-X), lesquelles s'étendent à travers les trous de liaison (27) et s'appliquent contre une face extérieure (40) du fond (9),
dans laquelle la largeur des trous de liaison (27) est plus grande que la largeur des barrettes de séparation (15),
dans laquelle les pattes de liaison (21) sont reliées par soudage ou par clinchage au fond (9) sur la face extérieure (40) de celles-ci.

2. Goulotte de câblage (1) selon la revendication 1, **caractérisée en ce que** les premiers trous de fixation (25) et les trous de liaison (27) s'étendent sur la longueur de la goulotte de câblage (1) en plusieurs rangées longitudinales espacées les unes des autres dans la direction transversale, dans laquelle chaque rangée longitudinale de trous de liaison (27) s'étend entre deux rangées adjacentes de premiers trous de fixation (25).

3. Goulotte de câblage (1) selon la revendication 1 ou 2, **caractérisée en ce que** les premiers trous de fixation (25) et les trous de liaison (27) forment des trous allongés dans la direction longitudinale de la goulotte de câblage (1).

4. Goulotte de câblage (1) selon l'une quelconque des revendications précédentes, dans laquelle la goulotte de câblage (1) présente en outre des deuxièmes trous de fixation (45), dans laquelle chaque deuxième trou de fixation (45) présente un bord (50) et deux pattes (52), lesquelles font saillie dans le deuxième trou de fixation (45) à partir du bord (50), et chaque patte (52) comprend une barrette de fixation (54) et une partie de retenue (56) reliée à la barrette de fixation (54), dans laquelle la barrette de fixation (54) est reliée au niveau d'une extrémité au bord (50) et la partie de retenue (56) forme une extrémité libre de la patte (52) et dans laquelle la largeur (b₂) de la partie de retenue (56) est supérieure à la largeur (b₁) de la barrette de fixation (54).

5. Goulotte de câblage (1) selon la revendication 4, dans laquelle les deux pattes (52) d'un deuxième trou de fixation (45) respectif sont symétriques par rapport à un plan de symétrie, lequel s'étend perpendiculairement au fond (9) et transversalement à la direction longitudinale (X-X) de la goulotte de câblage (1).

6. Goulotte de câblage (1) selon les revendications 4 et 5, dans laquelle les deuxièmes trous de fixation (45) sont disposés en rangées, lesquelles s'étendent dans la direction transversale de la goulotte de câblage (1) et chaque rangée de deuxièmes trous de fixation (45) s'étend entre une rangée transversale de trous de liaison (27) et une rangée transversale de premiers trous de fixation (25).

7. Ensemble (60) comprenant une goulotte de câblage (1) selon l'une quelconque des revendications précédentes, ainsi qu'un câble (62), lequel s'étend le long de la direction longitudinale (X-X) de la goulotte de câblage (1) et au moins un serre-câble (64) avec lequel le câble (62) est fixé au fond de la goulotte de câblage (1).

8. Véhicule ferroviaire comprenant au moins une goulotte de câblage (1) selon l'une quelconque des revendications 1 à 6.
